# EUROPEAN PATENT APPLICATION

(11) **EP 4 789 809 A1**
(43) Date of publication of application: **12.08.2026**
(21) Application number: 24874441.9
(22) Date of filing: 11.09.2024
(51) Int. Cl.: B23K 31/00, G06T 7/00, G06T 7/70, G06V 10/82, H04N 7/18

(54) **WELDING POSITION IDENTIFICATION SYSTEM, WELDING POSITION IDENTIFICATION METHOD, AND WELDING POSITION IDENTIFICATION PROGRAM**

(30) Priority: 03.10.2023 JP 2023171869
(71) Applicant: Amada Co., Ltd., Isehara-shi, Kanagawa 259-1196 (JP)
(72) Inventor: KUWANO Hiroto, Isehara-shi, Kanagawa 259-1196 (JP); NISHIMURA Hisaki, Isehara-shi, Kanagawa 259-1196 (JP); NARITA Naoyasu, Isehara-shi, Kanagawa 259-1196 (JP); KENMOTSU Hideki, Isehara-shi, Kanagawa 259-1196 (JP); KIKUCHI Akira, Isehara-shi, Kanagawa 259-1196 (JP)
(74) Representative: Grünecker Patent- und Rechtsanwälte PartG mbB
(86) International application number: PCT/JP2024/032566
(87) International publication number: WO 2025/074829

(57) **Abstract**

The system includes an imaging unit and a control unit, the imaging unit is configured to capture an image of a region containing at least a pair of adjacent metal pins, and the control unit is configured to execute pin position identification processing to identify a position of each metal pin from image data captured by the imaging unit, and welding position identification processing to identify a welding position of the pair of metal pins based on the identified position of each metal pin.

## Description

### Technical Field

The present invention relates to a welding position identification system, a welding position identification method, and a welding position identification program.

### Background Art

Conventionally, there is a welding machine equipped with a camera for capturing a product to be processed, an edge extraction unit, an invariant edge acquisition unit, a processing program correction unit, and a welding robot (Patent Literature 1, etc.). In the welding machine of Patent Literature 1, the edge extraction unit extracts an edge image from a captured image of the product imaged by the camera. Furthermore, from among edge images, the invariant edge acquisition unit acquires an edge image in an invariant plane where no positional deviation occurs with respect to welding points set in a processing program as an invariant edge image.

A correction amount acquisition unit performs pattern matching between a master invariant edge image and a workpiece invariant edge image acquired by the invariant edge acquisition unit, to obtain a deviation amount between both images as a correction amount to a welding point. Furthermore, the processing program correction unit generates a correction processing program for correcting the welding point by the correction amount to welding a workpiece. The welding robot then welds the workpiece based on the correction processing program.

### Citation List

### Patent Literature

Patent Literature 1: Japanese Patent No. 6286276

### Summary

### Technical Problem

However, for example, when adjacent metal pins used for electric motors are welded to each other, a welding target is small, and an allowable range of a welding position is limited, resulting in a problem that even a slight deviation in positioning in a control program of a welding robot may significantly affect a welding error. It is therefore necessary to accurately analyze a positional relationship between the metal pins and derive an appropriate welding position.

One aspect of the present invention provides a welding position identification system, a welding position identification method, and a welding position identification program that can improve welding quality.

### Solution to Problem

The welding position identification system according to one aspect of the present invention includes an imaging unit and a control unit, the imaging unit is configured to capture an image of a region containing at least a pair of adjacent metal pins, and the control unit is configured to execute pin position identification processing to identify the position of each metal pin from image data captured by the imaging unit, and welding position identification processing to identify the welding position of the pair of metal pins based on an identified position of each metal pin.

The welding position identification method according to one aspect of the present invention includes: capturing, by an imaging unit, an image of a region containing at least a pair of adjacent metal pins; identifying positions of the metal pins from captured image data; and identifying a welding position of the pair of metal pins.

The welding position identification program according to one aspect of the present invention causes a control device to execute imaging processing to capture, by an imaging unit, an image of a region containing at least a pair of adjacent metal pins, pin position identification processing to identify the positions of the metal pins from captured image data, and welding position identification processing to identify a welding position of the pair of metal pins.

### Advantageous Effect of Invention

According to a welding position identification system, a welding position identification method, and a welding position identification program according to one aspect of the present invention, a position of a metal pin can be identified from image data captured by an imaging unit, and a welding position can be identified based on the identified position, thereby improving welding quality.

### Brief Description of Drawings

[Figure 1] Figure 1 is a schematic diagram illustrating a welding position identification system according to an embodiment of the present invention.
[Figure 2] Figure 2 is a schematic diagram illustrating a welding jig of the present embodiment.
[Figure 3] Figure 3 is a functional block diagram illustrating a control device of the present embodiment.
[Figure 4] Figure 4 is a diagram illustrating an example of image data captured by a camera of the present embodiment.
[Figure 5] Figure 5 is a schematic diagram illustrating a region containing at least a pair of adjacent metal pins in the image data of the present embodiment.
[Figure 6] Figure 6 is a schematic diagram illustrating pin region identification processing of the present embodiment.
[Figure 7] Figure 7 is a schematic diagram illustrating center position candidate identification processing of the present embodiment.
[Figure 8] Figure 8 is a schematic diagram illustrating first center position identification processing of the present embodiment.
[Figure 9] Figure 9 is a schematic diagram illustrating the first center position identification processing of the present embodiment.
[Figure 10] Figure 10 is a schematic diagram illustrating the first center position identification processing of the present embodiment.
[Figure 11] Figure 11 is a schematic diagram illustrating second center position identification processing of the present embodiment.
[Figure 12] Figure 12 is a schematic diagram illustrating welding position identification processing of the present embodiment.
[Figure 13] Figure 13 is a schematic diagram illustrating the welding position identification processing of the present embodiment.
[Figure 14] Figure 14 is a schematic diagram illustrating the welding position identification processing of the present embodiment.
[Figure 15] Figure 15 is a flowchart illustrating an example of a welding position identification method of the present embodiment.

### Description of Embodiment

In the following, a preferred embodiment for conducting the present invention will be described with reference to the drawings. Note that the following embodiment does not limit the invention according to the claims, and all combinations of the features described in the embodiment are not necessarily essential for the solution of the invention.

### [Overall Configuration of Welding Position Identification System according to Present Embodiment]

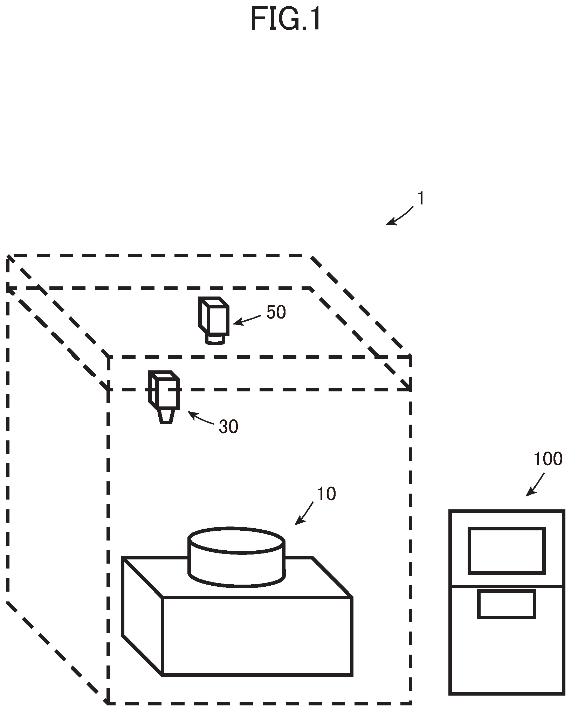

Figure 1 is a schematic diagram illustrating a welding position identification system according to an embodiment of the present invention.

First, with reference to Figure 1, a welding position identification system 1 according to the embodiment of the present invention will be generally described. The welding position identification system 1 according to the present embodiment generally includes a camera 50 functioning as an imaging unit and a control device 100 as illustrated in Figure 1. The welding position identification system 1 further includes a welding jig 10 and a welding head 30.

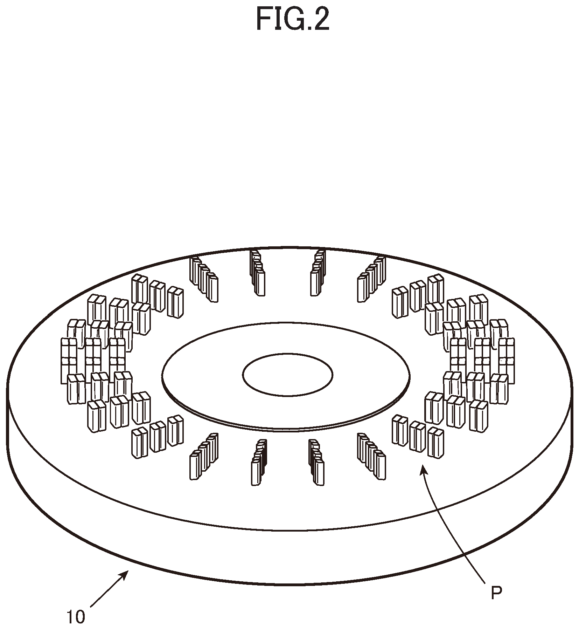

Figure 2 is a schematic diagram illustrating the welding jig of the present embodiment.

As illustrated in Figure 2, the welding jig 10 is configured such that a plurality of metal pins P (rectangular wires) to be welded can be attached to the welding jig. The welding jig 10 also includes a rotating part and is configured to be rotatable. Note that the welding jig 10 can employ various known configurations, and thus detailed description thereof will not be made.

As illustrated in Figure 1, the welding head 30 is arranged above the welding jig 10 and is configured to weld a pair of adjacent metal pins P. A laser beam oscillated by a laser oscillator (not illustrated) is transmitted to the welding head 30 via an optical fiber. The welding head 30 welds the pair of adjacent metal pins P by irradiating the metal pins P with laser beams from a nozzle (not illustrated).

In addition, the welding head 30 is attached to an orthogonal coordinate moving device or the like and is configured to move freely in three axial directions, namely front-rear, left-right and depth directions over the welding jig 10. The welding head 30 further has a tilting axis and a rotating axis and can freely change the irradiation direction of laser beams. Note that the welding head 30 can employ various known configurations, and thus detailed description thereof will not be made.

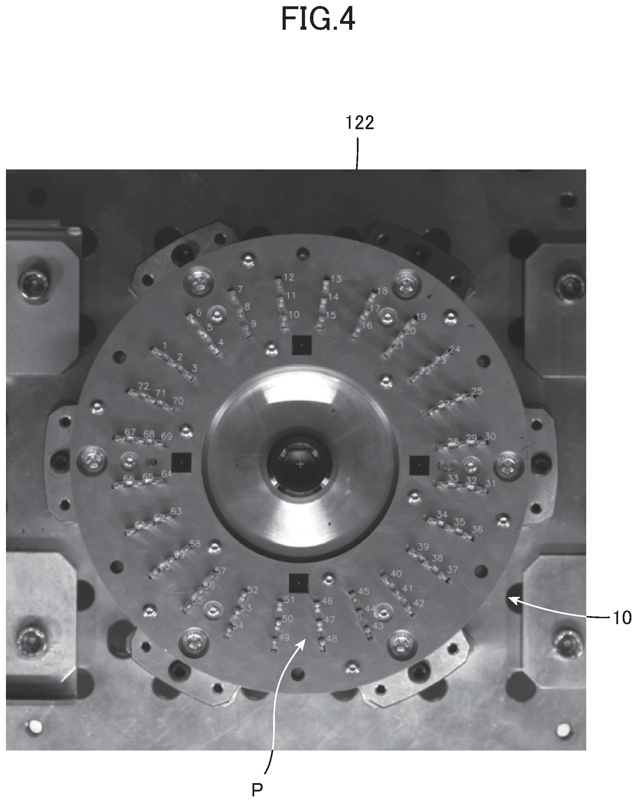

Figure 4 is a diagram illustrating an example of image data captured by the camera of the present embodiment.

The camera 50 is equipped with one lens and one picture sensor, and as illustrated in Figures 1 and 4, the camera is arranged above the welding jig 10 to capture an image of a region containing at least a pair of adjacent metal pins P. In the present embodiment, the camera 50 is configured to capture an image of a plurality of metal pins P attached to the welding jig 10 from above, as illustrated in Figure 1.

The camera 50 is configured to supply captured image data 122 to a control device 100. Note that the camera 50 according to the present embodiment may be configured to directly output a digital signal (image data 122) from the camera 50 to the control device 100, or may be configured to convert an analog signal (captured image signal), which is output from the camera 50, to the digital signal (image data 122) by an A/D converter (not illustrated) or the like to output the data to the control device 100.

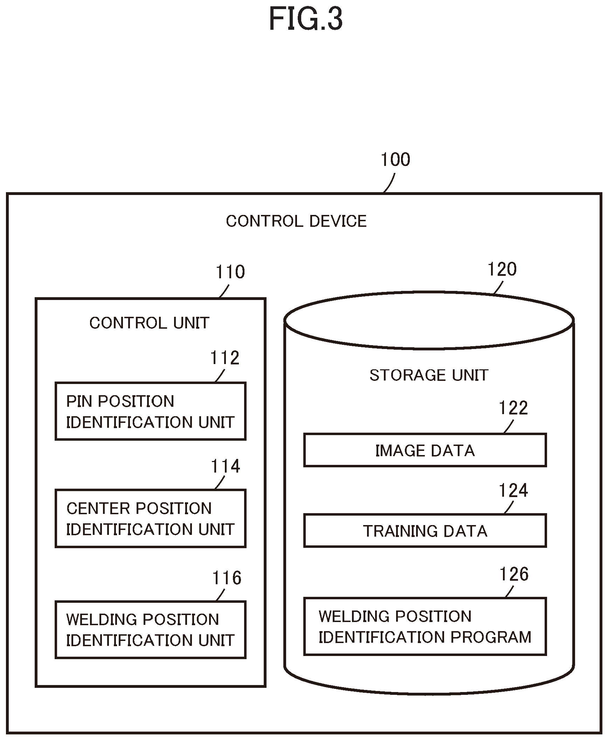

Figure 3 is a functional block diagram illustrating the control device of the present embodiment.

As illustrated in Figure 3, the control device 100 includes a control unit 110 and a storage unit 120. The control device 100 according to the present embodiment is a numerical control device or an electronic computer such as a desktop personal computer, a laptop computer, or a tablet terminal.

The control device 100 is configured to control the camera 50. Additionally, the control device 100 acquires the image data 122 captured by the camera 50 and stores the data in the storage unit 120. Furthermore, the control device 100 may be configured to control the welding head 30.

The control unit 110 includes, for example, an integrated arithmetic calculation device including a central processing unit (CPU) and a graphics processing unit (GPU). The control unit 110 includes a pin position identification unit 112, a center position identification unit 114, and a welding position identification unit 116, as illustrated in Figure 3.

The control unit 110 is configured to execute pin position identification processing to identify the position of each metal pin P from the image data 122 captured by the camera 50, and welding position identification processing to identify a welding position W of a pair of metal pins P based on the identified position of each metal pin P. The pin position identification processing includes pin position candidate identification processing to identify a candidate for a position of the metal pin P from the image data 122, and center position identification processing to identify a center position C of each metal pin P.

In the present embodiment, the center position C of the metal pin P generally refers to the centroid position of the metal pin P when the metal pin P attached to the welding jig 10 is viewed from above in plan view, but is not limited thereto. For example, if the metal pin P has a tip end formed in a convex shape, the vertex of the tip end (the highest position of the convex shape) may be identified as the center position C.

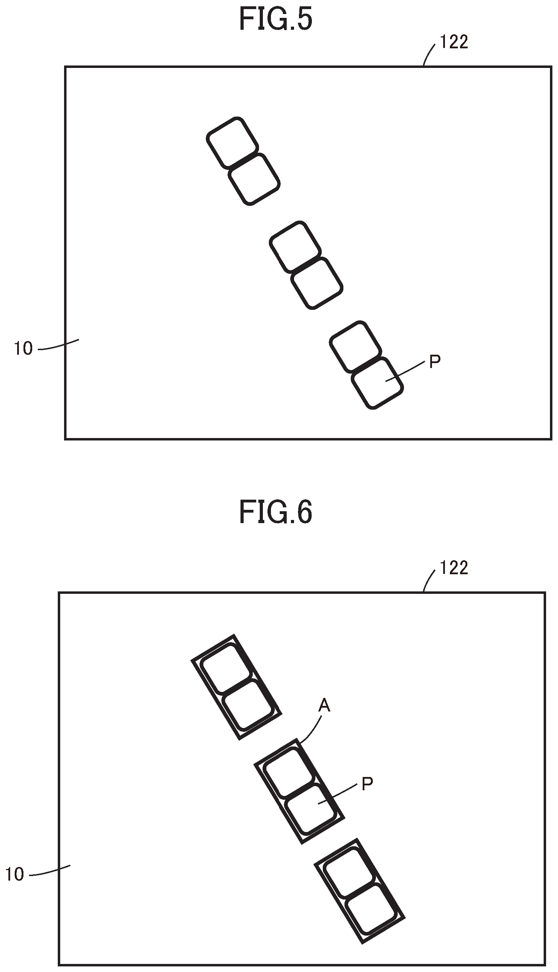

Figure 5 is a schematic diagram illustrating a region containing at least a pair of adjacent metal pins in the image data of the present embodiment. Figure 6 is a schematic diagram illustrating pin region identification processing of the present embodiment.

The pin position identification unit 112 is configured to execute the pin position candidate identification processing. The pin position candidate identification processing includes the pin region identification processing to identify a rectangular region A containing a pair of metal pins P from the image data 122 through color detection, as illustrated in Figures 5 and 6.

For the convenience of explanation, in the present embodiment, the image data 122 is described as being image data in which only some of the metal pins P attached to the welding jig 10 are captured, but this is not limited thereto, and the image data 122 may be image data in which all the metal pins P are captured, as illustrated in Figure 4.

In the pin region identification processing, the pin position identification unit 112 identifies the region of the pair of metal pins P through color detection in an HSV color space. Specifically, the pin position identification unit 112 identifies the region of the pair of metal pins P through color detection based on a difference in color between the surface of the welding jig 10 and the surface of the metal pin P. Additionally, if the image data 122 includes an overexposed region, the pin position identification unit 112 can interpolate the region from an image region in the vicinity.

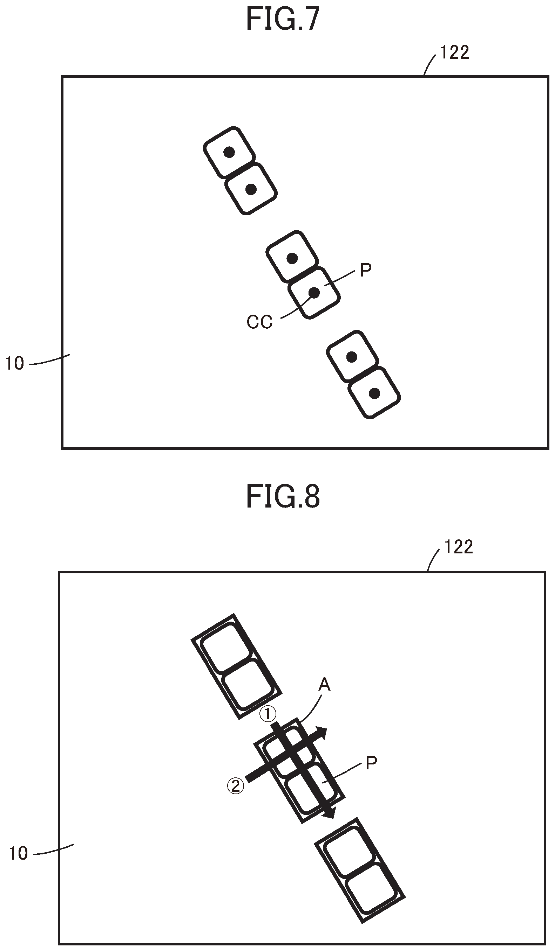

Figure 7 is a schematic diagram illustrating center position candidate identification processing of the present embodiment.

As illustrated in Figure 7, the pin position candidate identification processing includes the center position candidate identification processing to identify a candidate CC for a center position of each metal pin P from the image data 122 through machine learning. In the pin position candidate identification processing, the pin position identification unit 112 analyzes the image data 122 based on training data 124 stored in the storage unit 120 and identifies the candidate CC for the center position of each metal pin P.

In the present embodiment, the training data 124 is created such that an image containing only the metal pins P is positive data (positive image) and an image that does not contain the metal pins P is negative data (negative image), and the pin position identification unit 112 is configured to perform analysis using a cascade detector.

Figure 8 is a schematic diagram illustrating first center position identification processing of the present embodiment.

The center position identification unit 114 is configured to execute the center position identification processing. In the present embodiment, the center position identification unit 114 is configured to execute the first center position identification processing through image processing and second center position identification processing through machine learning. In the first center position identification processing, the center position identification unit 114 identifies the center position C of each metal pin P based on brightness changes in at least two directions of the rectangular region A identified in the pin region identification processing, as illustrated in Figure 8.

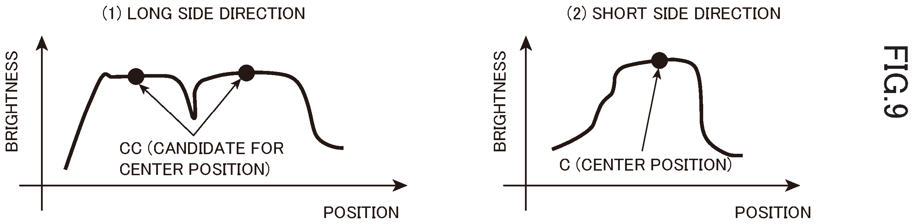

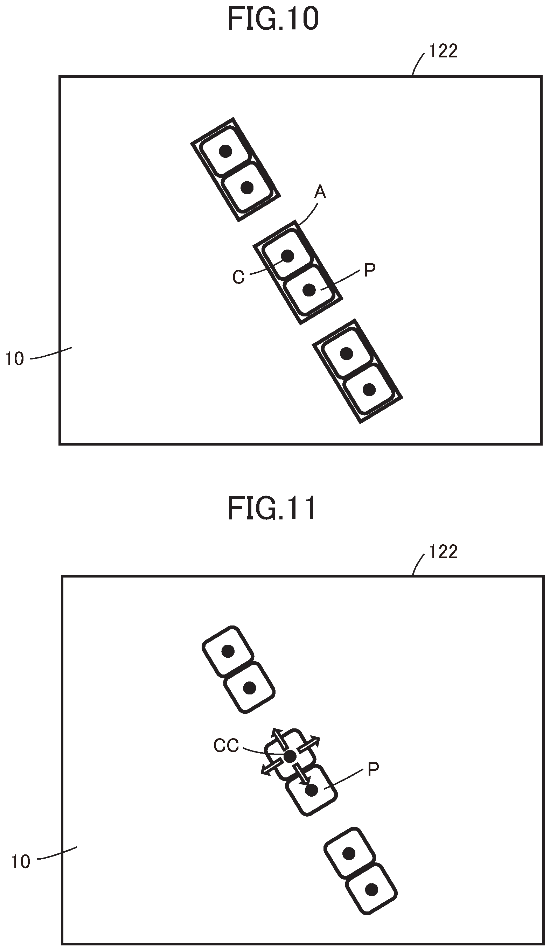

Figures 9 and 10 are schematic diagrams illustrating the first center position identification processing of the present embodiment.

Specifically, the center position identification unit 114 identifies the candidate CC for the center position of each metal pin P based on a brightness change in a long side direction in the rectangular region A, as illustrated in Figures 8 and 9, and identifies the center position C of each metal pin P based on a brightness change in a short side direction passing through the candidate CC for the center position, as illustrated in Figure 10.

Figure 11 is a schematic diagram illustrating the second center position identification processing of the present embodiment.

In the second center position identification processing, the center position identification unit 114 identifies the center position C of each metal pin P based on a color distribution in the vicinity of the candidate CC for the center position. Specifically, as illustrated in Figure 11, the center position identification unit 114 searches for a region in which many pixels of the same or similar color are distributed, in the vicinity of the candidate CC for the center position of each metal pin P identified by the pin position identification unit 112 from the image data 122 through machine learning in the center position candidate identification processing, and identifies that region as the center position C of the metal pin P.

The center position identification unit 114 is also configured to execute candidate identification determination processing to determine whether the candidate CC for the center position is identified through machine learning and can selectively use the first center position identification processing or the second center position identification processing based on the determination result.

Specifically, if the pin position identification unit 112 does not identify the candidate CC for the center position, the center position identification unit 114 executes the first center position identification processing and identifies the center position C of each metal pin P based on the brightness change within the rectangular region A identified by the pin position identification unit 112 in the pin region identification processing. Furthermore, if the pin position identification unit 112 identifies the candidate CC for the center position, the center position identification unit 114 executes the second center position identification processing and identifies the center position C of each metal pin P based on the color distribution in the vicinity of the candidate CC for the center position.

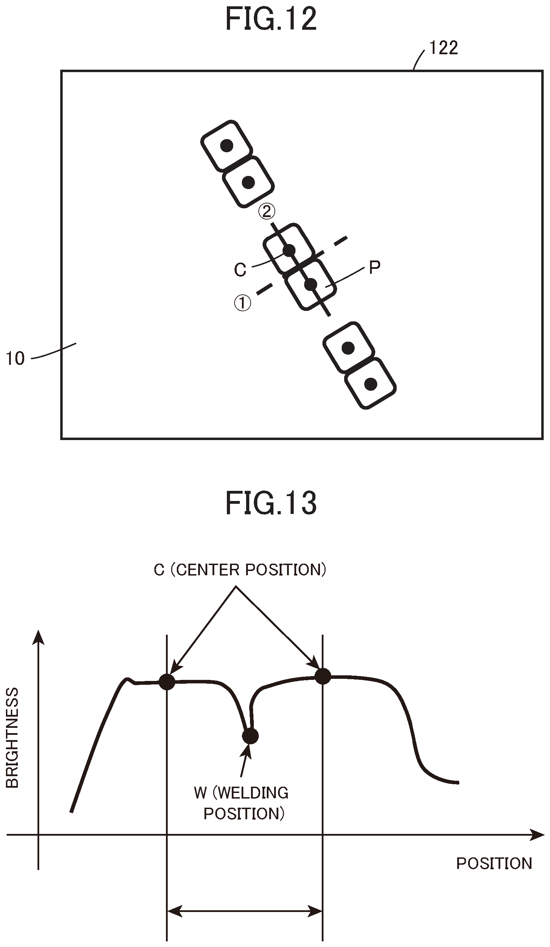

Figures 12 to 14 are schematic diagrams illustrating the welding position identification processing of the present embodiment.

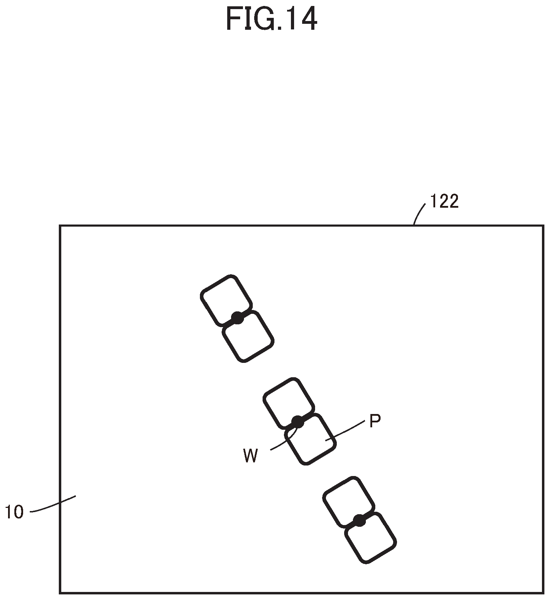

The welding position identification unit 116 is configured to execute the welding position identification processing. In the welding position identification processing, the welding position identification unit 116 assumes an intermediate position of a pair of metal pins P as a candidate for the welding position, as illustrated in Figure 12. The welding position identification unit 116 then extracts a brightness distribution along a straight line passing through respective center positions C of the pair of metal pins P and the candidate for the welding position, and identifies a position at which a brightness value is lowest between the respective metal pins P along the straight line as the welding position W, as illustrated in Figures 13 and 14.

Additionally, as preprocessing for the welding position identification processing, the welding position identification unit 116 may execute smoothing processing on the brightness distribution along the straight line passing through the respective center positions C of the pair of metal pins P and the candidate for the welding position. By executing the smoothing processing, it is advantageously possible to prevent a position having an extremely low brightness value along the straight line from being erroneously identified as the welding position W.

The control unit 110 including the above configuration is configured to create a control program for the welding head 30 to weld the metal pins P based on the identified welding position W. The control unit 110 is also configured to correct the control program of the welding head 30 based on the identified welding position W.

The storage unit 120 includes a storage medium such as a hard disk drive (HDD) or a solid state drive (SSD) and stores various pieces of data in a readable and writable manner. The storage unit 120 stores the image data 122, the training data 124, and a welding position identification program 126 as illustrated in Figure 2. The storage unit 120 further stores programs required for control of each unit of the control device 100.

The welding position identification program 126 causes the control device 100 to execute imaging processing to capture, by the imaging unit (camera 50 in the present embodiment), an image of a region containing at least a pair of adjacent metal pins P, pin position identification processing to identify the position of the metal pin P from the captured image data 122, and welding position identification processing to identify the welding position W of the pair of metal pins P. The welding position identification program 126 also includes information on the number of the metal pins P to be attached to the welding jig 10. By including the information on the number of the metal pins P to be attached to the welding jig 10, it is advantageously possible to prevent detection omissions of the metal pins P included in the image data 122.

### [Welding Position Identification Method according to Present Embodiment]

Next, the welding position identification method of the welding position identification system 1 according to the present embodiment will be described. The welding position identification method of the welding position identification system 1 according to the present embodiment generally includes: an imaging step of capturing, by an imaging unit (camera 50 of the present embodiment), an image of a region containing at least a pair of adjacent metal pins P; a pin position identification step of identifying a position of a metal pin P from captured image data 122; and a welding position identification step of identifying a welding position W of the pair of metal pins P.

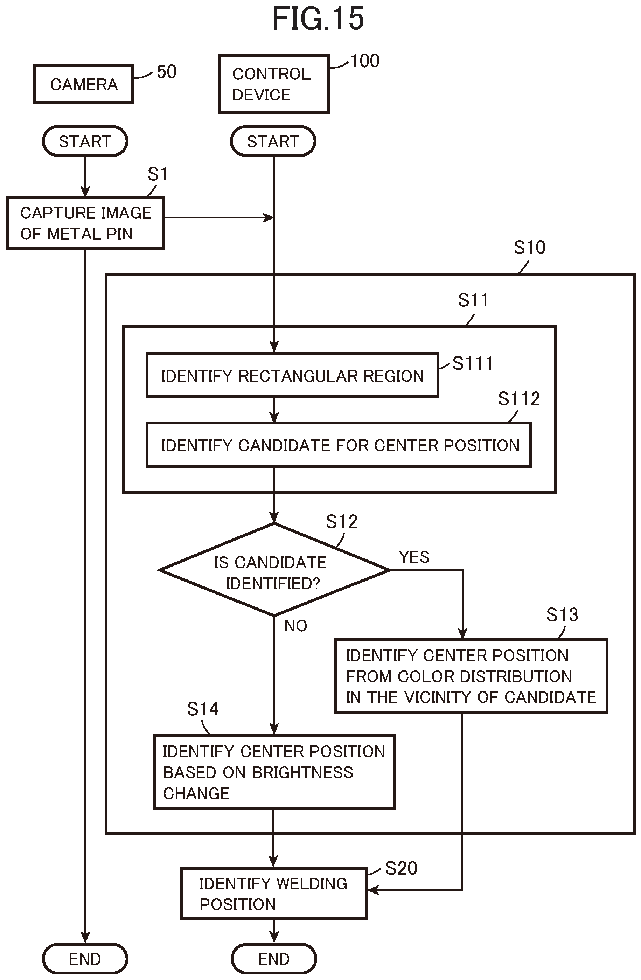

Figure 15 is a flow chart illustrating an example of the welding position identification method of the present embodiment.

First, the camera 50 captures an image of a region containing at least a pair of adjacent metal pins P (S1 in Figure 15: imaging step). Specifically, the camera captures a plurality of metal pins P attached to the welding jig 10. Then, the control unit 110 of the control device 100 acquires the image data 122 captured by the camera 50.

Next, the control unit 110 of the control device 100 identifies the position of each metal pin P from the image data 122 captured by the camera 50 (S10 in Figure 15: pin position identification step). Hereinafter, the pin position identification step will be described in detail below. First, the pin position identification unit 112 of the control unit 110 identifies a candidate for the position of the metal pin P from the image data 122 (S11 in Figure 15: pin position candidate identification step).

In the pin position candidate identification step, the pin position identification unit 112 identifies a rectangular region A containing a pair of metal pins P from the image data 122 through color detection (S111 in Figure 15: pin region identification step). Specifically, the pin position identification unit 112 identifies the region of the pair of metal pins P based on the difference in color between the surface of the welding jig 10 and the surface of the metal pin P by color detection in the HSV color space.

In addition, in the pin position candidate identification step, the pin position identification unit 112 identifies a candidate CC for the center position of each metal pin P from the image data 122 through machine learning (S112 in Figure 15: center position candidate identification step). Specifically, the pin position identification unit 112 identifies the candidate CC for the center position of each metal pin P from the image data 122 using a cascade detector based on the training data 124 in the storage unit 120.

Next, the center position identification unit 114 identifies the center position C of each metal pin P (center position identification step). Specifically, the center position identification unit 114 determines whether the pin position identification unit 112 identifies the candidate CC for the center position through machine learning in the center position candidate identification step (S12 in Figure 15: candidate identification determination step).

If the pin position identification unit 112 identifies the candidate CC for the center position (YES in S12 of Figure 15), the center position identification unit 114 identifies the center position C based on the color distribution in the vicinity of the identified candidate CC for the center position (S13 in Figure 15: second center position identification step). Specifically, the center position identification unit 114 detects a region in which many pixels of the same or similar color are distributed, in the vicinity of the candidate CC for the center position, and identifies the region as the center position C of the metal pin P.

On the other hand, if the pin position identification unit 112 does not identify the candidate CC for the center position (NO in S12 of Figure 15), the center position identification unit 114 identifies the center position C of each metal pin P based on the brightness change within the rectangular region A identified by the pin position identification unit 112 in the pin region identification step (S14 in Figure 15: first center position identification step). Specifically, the center position identification unit 114 identifies the candidate CC for the center position of each metal pin P based on the brightness change in the long side direction of the identified rectangular region A, and identifies the center position C of each metal pin P based on the brightness change in the short side direction passing through the candidate CC for the center position.

Subsequently, the welding position identification unit 116 identifies the welding position W of a pair of metal pins P based on the position of each metal pin P identified in the pin position identification processing (S20 in Figure 15: welding position identification step). Specifically, the welding position identification unit 116 assumes the intermediate position of a pair of metal pins P as a candidate for the welding position, extracts the brightness distribution along the straight line passing through the respective center positions C of the pair of metal pins P and the candidate for the welding position, and identifies the position having the lowest brightness value between the respective metal pins P along the straight line as the welding position W. Through the above-described steps, a series of welding position identification methods by the welding position identification system 1 according to the present embodiment is executed.

### [Advantages of the welding position identification system, welding position identification method, and welding position identification program according to the present embodiment]

As described above, the welding position identification system 1 according to the present embodiment includes the imaging unit (camera 50 in the present embodiment) and the control unit 110; the imaging unit is configured to capture the image of the region containing at least the pair of adjacent metal pins P; and the control unit 110 is configured to execute the pin position identification processing to identify the position of each metal pin P from the image data 122 captured by the imaging unit, and the welding position identification processing to identify the welding position W of the pair of metal pins P based on the identified position of each metal pin P.

By including such a configuration, the welding position identification system 1 according to the present embodiment then identifies the positions of the metal pins P from the image data 122 captured by the imaging unit and identifies the welding position W of the pair of metal pins P based on the identified positions of the metal pins P, thereby providing an advantage of improving welding quality.

In addition, in the welding position identification system 1 according to the present embodiment, the pin position identification processing includes the pin position candidate identification processing to identify candidates for the positions of the metal pins P from the image data 122, and the center position identification processing to identify the center position C of each metal pin P. By including such a configuration, the system can provide an advantage of reducing analysis processing of the welding position W (processing necessary for identifying the welding position W).

Furthermore, in the welding position identification system 1 according to the present embodiment, the pin position candidate identification processing includes the pin region identification processing to identify the rectangular region A containing a pair of metal pins P from the image data 122 through color detection. By including such a configuration, the system can provide an advantage of reducing false detection, for example, compared with detecting the shape of the metal pin P through edge extraction.

Furthermore, in the welding position identification system 1 according to the present embodiment, in the pin region identification processing, the control unit 110 identifies the region of the pair of metal pins P through color detection in the HSV color space. By including such a configuration, the system can identify the region of the pair of metal pins P while taking differences in saturation and lightness into account, thereby providing an advantage of more accurately identifying the region and ultimately improving the welding quality.

Additionally, in the welding position identification system 1 according to the present embodiment, the pin position candidate identification processing includes the center position candidate identification processing to identify the candidate CC for the center position of each metal pin P from the image data 122 through machine learning. By including such a configuration, the system can provide an advantage of identifying the candidate CC for the center position in a short time.

Furthermore, in the welding position identification system 1 according to the present embodiment, in the center position identification processing, the control unit 110 identifies the center position C of each metal pin P based on brightness changes in at least two directions of the rectangular region A identified in the pin region identification processing. By including such a configuration, the system can provide an advantage of identifying the center position C without identifying the candidate CC for the center position.

Furthermore, in the welding position identification system 1 according to the present embodiment, the control unit 110 identifies the candidate CC for the center position of each metal pin P based on the brightness change in the long side direction of the rectangular region A, and identifies the center position C of each metal pin P based on the brightness change in the short side direction passing through the candidate CC for the center position. By including such a configuration, the system can provide an advantage of efficiently and accurately identifying the center position C, thereby improving the welding quality.

According to the welding position identification system 1 of the present embodiment, in the center position identification processing, the control unit 110 identifies the center position C of each metal pin P based on the color distribution in the vicinity of the candidate CC for the center position. By including such a configuration, the system can identify the center position C more quickly and accurately than in identifying the position based on the brightness change, thus further providing an advantage of improving the welding quality.

Furthermore, in the welding position identification system 1 according to the present embodiment, the pin position candidate identification processing includes the pin region identification processing to identify the rectangular region A containing a pair of metal pins P from the image data 122 through color detection, and the control unit 110 is configured to execute the candidate identification determination processing to determine whether the candidate CC for the center position is identified through machine learning. If the candidate CC for the center position is not identified, the center position identification processing includes identifying the center position C of each metal pin P based on the brightness change within the rectangular region A identified in the pin region identification processing, and if the candidate CC for the center position is identified, the center position identification processing includes identifying the center position C based on the color distribution in the vicinity of the candidate CC for the center position. By including such a configuration, if the candidate CC for the center position is identified, the system can automatically select more accurate second center position identification processing, thus providing an advantage of further improving the welding quality.

Furthermore, in the welding position identification system 1 according to the present embodiment, in welding position identification processing, the control unit 110 assumes the intermediate position of a pair of metal pins P as a candidate for the welding position, extracts the brightness distribution along the straight line passing through each center position C of the pair of metal pins P and the candidate for the welding position, and identifies the position having the lowest brightness value between the respective metal pins P along the straight line as the welding position W. By including such a configuration, the system can accurately identify the welding position, thereby providing the advantage of improving the welding quality.

### [Modifications]

While the preferred embodiment of the present invention has been described above, the technical scope of the present invention is not limited to the scope defined in the above-described embodiment. It is possible to make various changes or modifications to the above-described embodiment.

For example, in the above-described embodiment, the pin position identification processing has been described as including the pin position candidate identification processing to identify the candidate for the position of the metal pin P from the image data 122 and the center position identification processing to identify the center position C of each metal pin P, but this is not limited to thereto. The pin position identification processing may not include both the pin position candidate identification processing and the center position identification processing and may include only one of them.

In the above-described embodiment, the pin position candidate identification processing has been described as including the pin region identification processing to identify the rectangular region A containing the pair of metal pins P from the image data 122 through color detection, but this is not limited thereto, and the pin position candidate identification processing may not include the pin region identification processing.

According to the above-described embodiment, in the pin region identification processing, the control unit 110 has been described as identifying the region of the pair of metal pins P through color detection in the HSV color space, but this is not limited thereto. In the pin region identification processing, the control unit 110 may not identify the region of the pair of metal pins P through color detection in the HSV color space. For example, the control unit 110 may identify the region of the pair of metal pins P through color detection in an RGB color space.

In the above-described embodiment, the pin position candidate identification processing has been described as including the center position candidate identification processing to identify the candidate CC for the center position of each metal pin P from the image data 122 through machine learning, but this is not limited thereto, and the pin position candidate identification processing may not include the center position candidate identification processing.

According to the above-described embodiment, in the center position identification processing, the control unit 110 has been described as identifying the center position C of each metal pin P based on the brightness changes in at least two directions of the rectangular region A identified in the pin region identification processing, but this is not limited thereto. In the center position identification processing, the control unit 110 may not identify the center position C of each metal pin P based on the brightness changes in at least two directions of the rectangular region A identified in the pin region identification processing. For example, the control unit 110 may identify the center position C of each metal pin P based on the brightness change in one direction of the rectangular region A.

In the above-described embodiment, the control unit 110 has been described as identifying the candidate CC for the center position of each metal pin P based on the brightness change in the long side direction of the rectangular region A and identifying the center position C of each metal pin based on the brightness change in the short side direction passing through the candidate CC for the center position, but this is not limited thereto. The control unit 110 identifies the candidate CC for the center position of each metal pin P based on the brightness change in the long side direction of the rectangular region A, and may not identify the center position C of each metal pin based on the brightness change in the short side direction passing through the candidate CC for the center position. For example, the control unit 110 may identify the candidate CC for the center position of each metal pin P based on the brightness change in the short side direction of the rectangular region A, and may identify the center position C of each metal pin based on the brightness change in the long side direction passing through the candidate CC for the center position. Additionally, the control unit 110 may identify the center position C of each metal pin based on a brightness change in a diagonal direction in the rectangular region A.

According to the embodiment described above, in the center position identification processing, the control unit 110 has been described as identifying the center position C of each metal pin P based on the color distribution in the vicinity of the candidate CC for the center position, but this is not limited thereto. The control unit 110 may not identify the center position C of each metal pin P based on the color distribution in the vicinity of the candidate CC for the center position in the center position identification processing.

In the embodiment described above, the pin position candidate identification processing includes the pin region identification processing to identify the rectangular region A containing a pair of metal pins P from the image data 122 through color detection, and the control unit 110 is configured to execute the candidate identification determination processing to determine whether the candidate CC for the center position is identified through machine learning. If the candidate CC for the center position is not identified, the center position identification processing includes identifying the center position C of each metal pin P based on the brightness change within the rectangular region A identified in the pin region identification processing, and if the candidate CC for the center position is identified, the center position identification processing includes identifying the center position C based on the color distribution in the vicinity of the candidate CC for the center position, but this is not limited thereto. The control unit 110 may not execute the candidate identification determination processing.

According to the embodiment described above, in the welding position identification processing, the control unit 110 has been described as assuming the intermediate position of a pair of metal pins P as the candidate for the welding position, extracting the brightness distribution along the straight line passing through the respective center positions C of the pair of metal pins P and the candidate for the welding position, and identifying the position having the lowest brightness value between the respective metal pins P along the straight line as the welding position W, but this is not limited thereto. In the welding position identification processing, the control unit 110 may not identify the position having the lowest brightness value between the respective metal pins P along the straight line as the welding position W by assuming the intermediate position C of a pair of metal pins P as the candidate for the welding position and extracting the brightness distribution along the straight line passing through the respective center positions C of the pair of metal pins P and the candidate for the welding position.

In the embodiment described above, the camera 50 has been described as being attached above the welding jig 10, such as on a ceiling surface, but this is not limited thereto, and the camera 50 may be built into the welding head 30 and directed in the same direction as a direction for the welding head 30 to emit laser beams. Additionally, the camera 50 may be attached to the outside of the welding head 30. Furthermore, if the camera 50 is built into the welding head 30 or attached to the outside of the welding head 30, the control device 100 may rotate the image data 122 according to the orientation of the welding head 30 (camera 50).

### Reference Signs List

1 Welding position identification system
10 Welding jig
30 Welding head
50 Camera
100 Control device
110 Control unit
112 Pin position identification unit
114 Center position identification unit
116 Welding position identification unit
120 Storage unit
122 Image data
124 Training data
126 Welding position identification program
A Rectangular region
C Center position
CC Candidate for center position
P Metal pin
W Welding position

## Claims

1. A welding position identification system, comprising: an imaging unit and a control unit,
the imaging unit being configured to capture an image of a region containing at least a pair of adjacent metal pins,
the control unit being configured to execute:
pin position identification processing to identify a position of each metal pin from image data captured by the imaging unit, and
welding position identification processing to identify a welding position of the pair of metal pins based on the identified position of each metal pin.

2. The welding position identification system according to claim 1, wherein the pin position identification processing includes:
pin position candidate identification processing to identify a candidate for the position of the metal pin from the image data, and
center position identification processing to identify a center position of each metal pin.

3. The welding position identification system according to claim 2, wherein the pin position candidate identification processing includes pin region identification processing to identify a rectangular region containing the pair of metal pins from the image data through color detection.

4. The welding position identification system according to claim 3, wherein in the pin region identification processing, the control unit identifies a region of the pair of metal pins through color detection in an HSV color space.

5. The welding position identification system according to any one of claims 2 to 4, wherein the pin position candidate identification processing includes center position candidate identification processing to identify a candidate for a center position of each metal pin from the image data through machine learning.

6. The welding position identification system according to claim 3 or 4, wherein in the center position identification processing, the control unit identifies the center position of each metal pin based on brightness changes in at least two directions of the rectangular region identified in the pin region identification processing.

7. The welding position identification system according to claim 6, wherein the control unit identifies a candidate for a center position of each metal pin based on a brightness change in a long side direction in the rectangular region, and identifies the center position of each metal pin based on a brightness change in a short side direction passing through the candidate for the center position.

8. The welding position identification system according to claim 5, wherein in the center position identification processing, the control unit identifies the center position of each metal pin based on a color distribution in the vicinity of the candidate for the center position.

9. The welding position identification system according to claim 5, wherein the pin position candidate identification processing includes pin region identification processing to identify a rectangular region containing the pair of metal pins from the image data through color detection,
the control unit is configured to execute candidate identification determination processing to determine whether the candidate for the center position is identified through machine learning,
if the candidate for the center position is not identified, the center position identification processing includes identifying the center position of each metal pin based on a brightness changes within the rectangular region identified in the pin region identification processing, and
if the candidate for the center position is identified, the center position identification processing includes identifying the center position based on a color distribution in the vicinity of the candidate for the center position.

10. The welding position identification system according to claim 1 or 2, wherein in the welding position identification processing, the control unit assumes an intermediate position of the pair of metal pins as a candidate for the welding position,
extracts a brightness distribution along a straight line passing through respective center positions of the pair of metal pins and a candidate for a welding position, and identifies a position having the lowest brightness value between the respective metal pins along the straight line as the welding position.

11. A welding position identification method comprising: capturing, by an imaging unit, an image of a region containing at least a pair of adjacent metal pins,
identifying positions of the metal pins from captured image data, and
identifying a welding position of the pair of metal pins.

12. A welding position identification program causing a control device to execute:
imaging processing to capture, by an imaging unit, an image of a region containing at least a pair of adjacent metal pins,
pin position identification processing to identify positions of the metal pins from captured image data, and
welding position identification processing to identify a welding position of the pair of metal pins.
